(19) Europäisches Patentamt
European Patent Office
Office européen des brevets

(11) **EP 3 534 360 B1**

(12) **FASCICULE DE BREVET EUROPEEN**

(45) Date de publication et mention
de la délivrance du brevet:
**30.06.2021 Bulletin 2021/26**

(51) Int Cl.:
***G10K 11/172*** *(2006.01)* ***F02K 1/82*** *(2006.01)*
***F02C 7/24*** *(2006.01)* ***F02C 7/045*** *(2006.01)*

(21) Numéro de dépôt: **19157493.8**

(22) Date de dépôt: **15.02.2019**

(54) **REVÊTEMENT INSONORISANT COMPORTANT UNE STRUCTURE ALVÉOLAIRE À CELLULES COURBES FORMÉES DE PART ET D'AUTRE D'UNE MÊME PAROI INTÉRIEURE**

SCHALLDÄMMENDE BESCHICHTUNG, DIE EINE WABENSTRUKTUR MIT GEKRÜMMTEN ZELLEN UMFASST, DIE AUF DER EINEN UND DER ANDEREN SEITE AUS DERSELBEN INNENWAND GEBILDET WERDEN

SOUNDPROOFING COATING COMPRISING A HONEYCOMB STRUCTURE WITH CURVED CELLS FORMED ON EITHER SIDE OF A SINGLE INNER WALL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2018 FR 1851751**

(43) Date de publication de la demande:
**04.09.2019 Bulletin 2019/36**

(73) Titulaire: **Airbus Operations S.A.S.**
**31060 Toulouse (FR)**

(72) Inventeur: **CARIOU, Charles**
**31000 Toulouse (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(56) Documents cités:
**GB-A- 1 470 036      US-A- 4 433 751**
**US-A1- 2015 060 194   US-A1- 2015 292 413**

EP 3 534 360 B1

**Description**

La présente invention concerne le domaine des structures d'insonorisation.

Elle porte en particulier sur un revêtement d'insonorisation à structure alvéolaire. Le revêtement objet de l'invention peut avoir des applications, en particulier dans le domaine aéronautique, par exemple dans des nacelles de groupes propulseurs d'aéronef.

Des revêtements ou panneaux comportant une structure alvéolaire constituée de cellules ou alvéoles, c'est-à-dire de volumes unitaires creux juxtaposés, sont employés dans de nombreux domaines techniques, notamment dans le domaine aéronautique. Ils peuvent présenter une grande rigidité pour une masse faible. Les revêtements comportant une structure alvéolaire ayant des cellules ouvertes sur une face, ou à tout le moins des cellules communiquant avec l'extérieur du panneau sont employés pour leurs propriétés d'insonorisation. De tels panneaux sont parfois appelés panneaux acoustiques.

Les panneaux ou revêtements à structure alvéolaire peuvent être formés en divers matériaux par exemple plastiques, composites, ou métalliques. Les cellules peuvent présenter diverses géométries. Une forme bien connue de structure alvéolaire présente des cellules en forme de prisme droit de base hexagonale. On parle souvent de structure « en nid d'abeilles » pour désigner ce type de structure à cellules hexagonales, mais cette expression est également employée par abus de langage pour désigner des panneaux alvéolaires présentant d'autres formes de cellules.

Ainsi, un panneau ou revêtement acoustique classique comprend généralement un noyau en nid d'abeilles interposé entre une feuille perforée formant une première face et une feuille pleine obturant les cellules et formant une deuxième face du revêtement.

Les cellules des panneaux acoustiques agissent comme de petits résonateurs permettant l'absorption des ondes acoustiques sur une plage de fréquence donnée. Pour qu'un résonateur soit efficace, sa plage de fréquence d'absorption doit comprendre la fréquence à laquelle le panneau est soumis. Or, les cavités de taille relativement réduite des panneaux acoustiques correspondent à des fréquences élevées. Il est ainsi difficile d'obtenir un panneau alvéolaire efficace pour certaines applications soumises à des basses fréquences.

Par exemple, les groupes propulseurs des aéronefs commerciaux comportent un moteur à turbomachine et une nacelle pouvant comprendre un revêtement acoustique pour atténuer le bruit généré pendant le fonctionnement du moteur. Néanmoins, les fréquences acoustiques générées par le moteur d'un aéronef sont relativement basses et s'étendent sur une plage assez large. Les basses fréquences devant être atténuées sont par exemple les fréquences en dessous de 2000 Hz selon le moteur considéré. L'adoption de groupes propulseurs de grand diamètre tend à faire baisser plus encore les fréquences des ondes acoustiques qu'ils génèrent. Or, la nécessité d'avoir des cellules de grand volume pour absorber des fréquences basses mène à des panneaux de grande épaisseur, peu compatibles d'une application aéronautique.

Le document US2015292413 présente un panneau acoustique dont la géométrie des cellules est améliorée dans le but d'une application à un moteur d'avion. En particulier, les cellules du revêtement acoustique décrit par le document US2015292413 s'étendent selon une forme courbe, en « S », de sorte à les allonger. L'augmentation de la longueur des cellules permet l'absorption de fréquences plus basses pour une même épaisseur de panneau qu'avec des cellules droites. Néanmoins, le décalage, vers les basses fréquences, de la plage des fréquences absorbées comparativement à la plage des fréquences absorbées par un revêtement à cellules droites est limité.

Le document US4433751 décrit un panneau acoustique selon l'art antérieur.

L'invention tend à proposer un revêtement insonorisant à structure alvéolaire, amélioré de sorte à ce qu'il permette une insonorisation sur des fréquences basses et une large plage de fréquence, comparativement aux revêtements connus dans l'état de la technique, à épaisseur constante et masse comparable.

Ainsi, l'invention porte sur un revêtement insonorisant comportant une structure alvéolaire, le revêtement présentant une première face et une deuxième face, ladite structure alvéolaire étant formée de cellules ouvertes sur ladite première face et fermées sur ladite deuxième face, lesdites cellules étant juxtaposées dans une première direction dite longitudinale et dans une deuxième direction dite transversale et qui est orthogonale à la direction longitudinale. Chaque cellule comporte un conduit s'étendant au moins entre la première face et la deuxième face, ledit conduit étant formé entre une paroi extérieure et une paroi intérieure de la cellule et présentant une restriction de sa section. La paroi extérieure et la paroi intérieure présentent des formes arrondies, dénuées d'arêtes. Chaque cellule comporte une cavité dans laquelle débouche ledit conduit. La cellule forme un résonateur comportant un col formé par ledit conduit, et ladite cavité. La cellule est conformée de sorte que le conduit et la cavité sont formés de part et d'autre de la paroi intérieure.

L'adoption d'une telle configuration de cellule permet l'obtention d'un résonateur adapté à traiter des fréquences basses comparativement aux cellules d'un revêtement de même épaisseur constitué selon l'état de la technique. La géométrie en volute permet en particulier l'obtention d'un col de résonateur particulièrement long, potentiellement de faible section, tout en maintenant une cavité de volume important. En outre, cette géométrie confère à la cellule une impédance permettant de réduire le bruit incident.

Chaque cellule du revêtement peut présenter une section sensiblement en volute dans un plan de coupe longitudinal perpendiculaire à la direction transversale.

La paroi intérieure d'une cellule du revêtement et la paroi extérieure d'une cellule adjacente se rejoignent de sorte à ne former qu'une paroi transversale séparant ladite cellule de ladite cellule adjacente au niveau de la première face. Il n'y a ainsi pas de perte de surface acoustique entre les cellules. En particulier, la paroi intérieure d'une cellule du revêtement et la paroi extérieure d'une cellule adjacente se rejoignent au niveau de la première face en formant entre elles un angle aigu de sorte à former une arête transversale au niveau de ladite première face. La paroi transversale séparant ladite cellule de ladite cellule adjacente au niveau de la première face se limite donc dans ce cas à cette seule arête transversale. Cette configuration favorise l'entrée des ondes acoustiques dans les cellules du revêtement.

Le conduit de chaque cellule peut comporter successivement :

- une première portion partant de la première face du revêtement insonorisant en direction de la deuxième face du revêtement insonorisant, et
- une deuxième portion courbe comportant une entrée et une sortie, et formant entre une direction du conduit à l'entrée de ladite deuxième portion et une direction du conduit à la sortie de ladite deuxième portion, un angle compris entre 90° et 180°.

La première portion de conduit peut être sensiblement symétrique selon un plan transversal perpendiculaire à la première face.

Le conduit de la cellule formant le col du résonateur et la cavité sont par exemple dimensionnés de sorte que la fréquence de résonance dudit résonateur soit inférieure à 2000 Hz.

La première face peut comporter une feuille résistive permettant la communication des cellules du revêtement avec l'extérieur dudit revêtement.

La paroi intérieure de chaque cellule peut comporter une perforation liant fluidiquement le col à la cavité du résonateur.

L'invention porte également sur un groupe propulseur d'aéronef comportant une nacelle et un moteur, dans lequel une surface interne de la nacelle et/ou une surface externe d'un carter du moteur présente un revêtement insonorisant tel que précédemment décrit.

D'autres particularités et avantages de l'invention apparaîtront encore dans la description ci-après.

Aux dessins annexés, donnés à titre d'exemples non limitatifs :

- la figure 1 représente selon une vue schématique en trois dimensions un revêtement insonorisant de l'état de la technique ;
- la figure 2 représente selon une vue schématique en trois dimensions la structure alvéolaire du revêtement insonorisant de la figure 1 ;

- la figure 3 représente selon une vue schématique en coupe quatre cellules adjacentes de la structure alvéolaire des figures 1 et 2 ;
- la figure 4 représente selon une vue schématique en coupe deux cellules juxtaposées d'un revêtement insonorisant selon un mode de réalisation de l'invention ;
- la figure 5 illustre sur des vues schématiques en coupe le principe mis en œuvre dans l'invention par comparaison d'un résonateur de Helmholtz classique avec une cellule de revêtement insonorisant selon un mode de réalisation de l'invention détaillé à la figure 7;
- les figures 6 et 7 représentent selon une vue schématique en coupe deux cellules juxtaposées d'un revêtement insonorisant selon des modes de réalisation de l'invention ;
- les figures 8 et 9 représentent selon une vue schématique en coupe des cellules juxtaposées de revêtements insonorisant selon des modes de réalisation de l'invention ;
- la figure 10 représente une variante du mode de réalisation de la figure 9, selon une vue similaire ;
- les figures 11 à 13 représentent selon une vue schématique en coupe des cellules juxtaposées de revêtements insonorisants selon des modes de réalisation de l'invention ;
- la figure 14 représente selon une vue schématique en trois dimensions un revêtement insonorisant selon le mode de réalisation de la figure 7;
- la figure 15 représente schématiquement selon une vue en coupe un groupe propulseur d'aéronef dont la nacelle est équipée d'un revêtement insonorisant.

Dans l'ensemble de la description suivante, les termes « revêtement » et « panneau » sont généralement substituables. En effet, un panneau insonorisant est généralement destiné à être apposé sur un élément porteur, et constitue en ce sens un revêtement. En outre, un panneau n'est pas limité à une géométrie plate. De même, un revêtement insonorisant comportant une structure alvéolaire est formé d'un panneau, pouvant être apposé sur un élément porteur, et présente ou non une flexibilité lui permettant d'être conformé sur ledit élément porteur.

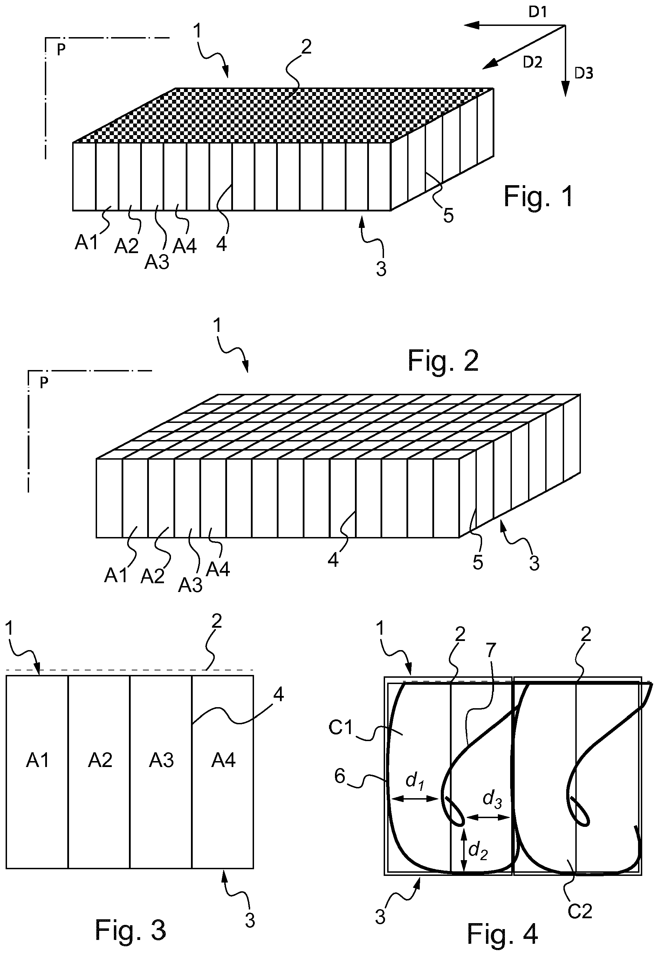

La figure 1 représente schématiquement un revêtement insonorisant connu dans l'état de la technique. Il comporte des cellules A1, A2, A3, A4, etc. juxtaposées les unes aux autres dans deux directions orthogonales entre elles de sorte à former une structure alvéolaire. Arbitrairement, une première direction D1 de juxtaposition des cellules est dite longitudinale, et une deuxième direction D2 de juxtaposition des cellules, orthogonale à la première direction D1, est dite transversale. Une troisième direction D3 est définie orthogonalement aux première direction D1 et deuxième direction D2.

Sur une première face 1 du revêtement, les cellules A1...A4 sont ouvertes. Une feuille perforée 2 les recouvre, permettant la communication des cellules A1 ...A4 avec le milieu extérieur.

Sur une deuxième face 3, les cellules A1...A4 sont fermées par exemple par une feuille pleine obstruant le fond des cellules.

Afin de mieux exposer la structure cellulaire, le revêtement insonorisant de la figure 1 est représenté sur la figure 2 sans la feuille perforée 2. Les cellules de la structure alvéolaire ici représentées sont dites carrées, en ce que leur volume est celui d'un prisme droit de base carrée s'étendant entre la première face 1 et la deuxième face 3 du revêtement insonorisant. Dans l'exemple ici représenté, les cellules sont juxtaposées de sorte à former un quadrillage régulier. Ainsi, chaque cellule, est adjacente à deux cellules longitudinalement et à deux cellules transversalement, à l'exception évidente des cellules situées sur les bords du revêtement.

La figure 3 représente quatre cellules A1...A4 des structures alvéolaires des revêtements insonorisant représentés aux figures 1 et 2, selon le plan de coupe P longitudinal représenté aux figures 1 et 2. Le plan de coupe P traverse longitudinalement les cellules du revêtement insonorisant, et est orthogonal à la première face 1 et à la deuxième face 3 dans le cas d'un revêtement ou panneau plan. Chaque cellule est séparée de cellules adjacentes par une paroi transversale 4 qui est droite et qui relie la première face 1 et la deuxième face 3 orthogonalement à ces dernières. Dans la direction longitudinale, des parois longitudinales 5 séparent les cellules, de manière similaire.

Les figures suivantes 4 à 15 représentent tout ou partie d'un revêtement insonorisant conforme à divers modes de réalisation de l'invention, donnés à titre d'exemples. En particulier, les figures 4 à 14 représentent des vues en coupe de cellules selon divers modes de réalisation de l'invention, selon un plan de coupe analogue au plan de coupe de la figure 3. Afin de faciliter la compréhension des modes de réalisation présentés aux figures 4 à 14 par comparaison à la structure alvéolaire conventionnelle des figures 1 à 3, les coupes des cellules des revêtements insonorisant selon l'invention sont représentées (en traits forts) en surimpression de la coupe des cellules de la structure conventionnelle des figures 1 à 3 (en traits fins).

La figure 4 représente deux cellules C1, C2 d'un revêtement insonorisant conforme à un mode de réalisation de l'invention.

Dans l'invention, chaque cellule de la structure alvéolaire présente une section, selon le plan de coupe P, définie par une paroi extérieure 6 et une paroi intérieure 7. La paroi extérieure 6 et la paroi intérieure 7 forment un conduit. Ce conduit débouche dans une cavité close. Ainsi, chaque cellule forme un résonateur, assimilable à un résonateur de Helmholtz, dont le col est formé par le conduit.

Le conduit est courbé, de sorte que ledit conduit et ladite cavité sont formés de part et d'autre de la paroi intérieure 7.

La cellule peut ainsi présenter, comme c'est le cas dans les modes de réalisation présentés aux figures 4 à 13, une forme générale en volute. Une volute correspond à une forme, bidimensionnelle, approximativement en spirale.

Chaque cellule du mode de réalisation représenté à la figure 4 a selon la direction longitudinale sensiblement la même dimension que deux cellules selon l'état de la technique représenté à la figure 3. Au niveau de la première face 1, chaque cellule C1, C2 est ouverte, et présente une surface ouverte correspondant sensiblement à la surface ouverte de deux cellules selon l'état de la technique représenté à la figure 3.

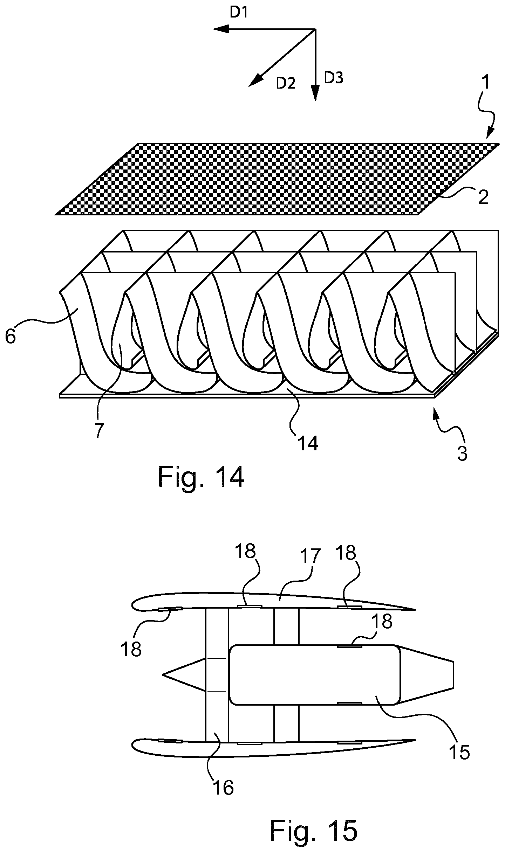

Dans la direction transversale, comme décrit plus en détail en référence à la figure 15, la structure alvéolaire comporte des parois longitudinales 5 similaires à celles de l'état de la technique représenté aux figures 1 à 3. La paroi extérieure 6 et la paroi intérieure 7 sont orthogonales aux parois longitudinales 5. La section ou surface de passage de ce conduit présente en partant de la face ouverte de la cellule et en cheminant vers le fond de ladite cellule, un rétrécissement (formant une restriction de la section de passage du conduit).

Par exemple, dans le mode de réalisation de la figure 4 tout comme dans de nombreux autres modes de réalisation envisageables, le conduit de la cellule C1, C2 comporte une première portion de conduit partant de la face ouverte de la cellule (au niveau de la première face 1 du revêtement insonorisant) en direction de la deuxième face 3 du revêtement insonorisant, suivi d'une deuxième portion courbe, formant dans ce mode de réalisation un angle de 180° entre la direction du conduit à son entrée et la direction du conduit à sa sortie, dans le plan de coupe P. En d'autres termes, le conduit forme au niveau de la deuxième portion un demi-tour avant de déboucher dans la cavité de la cellule. La portion courbe tournant à 180° formée par la deuxième portion de conduit a, dans l'exemple représenté, une direction à son entrée sensiblement parallèle à la troisième direction D3 et orientée de la première face 1 vers la deuxième face 3, et cette portion courbe a une sortie également sensiblement parallèle à la troisième direction D3 et orientée de la deuxième face 3 vers la première face 1.

La deuxième portion débouche dans une cavité, c'est-à-dire un volume clos de section élargie.

Le rétrécissement du conduit peut être continu, progressif ou non, et s'étendre sur la première portion de conduit ou sur la première et la deuxième portion de conduit.

La cellule peut ainsi présenter une dimension à l'entrée du conduit qui la forme, mesurée entre la paroi extérieure 6 et la paroi intérieure 7 au niveau de la face ouverte de la cellule, qui est supérieure à une première dimension $d_1$ mesurée, dans la première direction D1, entre la paroi extérieure 6 et la paroi intérieure 7 à la limite entre la première portion et la deuxième portion.

La première dimension $d_1$ peut être supérieure à une deuxième dimension $d_2$ mesurée, dans la troisiè-

me direction D3, entre la paroi extérieure 6 et la paroi intérieure 7 au niveau de la portion courbe où le conduit est parallèle et tangent à la deuxième face 3 du revêtement. La deuxième dimension d2 est ainsi mesurée au niveau où le conduit a formé une courbe tournant à 90° dans le plan de coupe P par rapport à la direction générale de la première portion du conduit, à savoir la troisième direction D3. Le conduit est ainsi orienté selon la première direction D1 au niveau où la deuxième dimension d2 est mesurée.

La deuxième dimension d2 peut être supérieure à une troisième dimension d3, mesurée dans la première direction D1 entre la paroi extérieure 6 et la paroi intérieure 7 à l'entrée de la cavité.

Dans la mesure où les cellules sont définies entre des parois longitudinales 5 parallèles comme montré plus en détail en référence à la figure 15, elles présentent une dimension constante dans la deuxième direction D2. Ainsi, la section de passage du conduit est rectangulaire, et la surface de cette section de passage est proportionnelle à la distance entre la paroi extérieure 6 et la paroi intérieure 7.

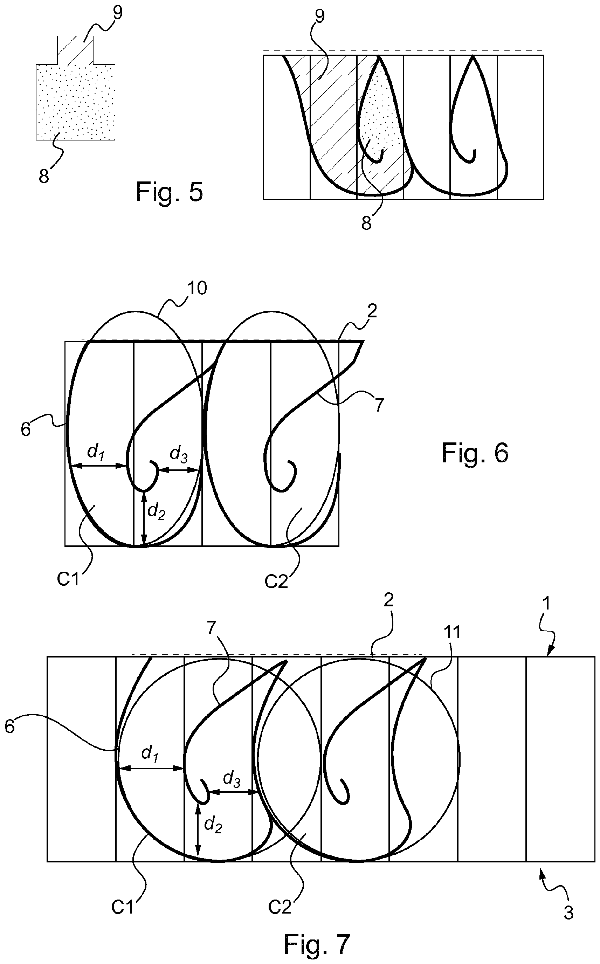

La figure 5 illustre le principe mis en œuvre dans l'invention. A gauche sur la figure 5, est représenté, en coupe et de manière très schématique, un résonateur de Helmholtz tel que connu dans l'état de la technique. Un résonateur de Helmholtz comporte une cavité 8 fermée de volume V qui communique avec l'extérieur par l'intermédiaire d'un petit tube de longueur L et de section A, appelé col 9.

La fréquence propre $F_0$ d'un résonateur de Helmholtz standard est ainsi :

$$F_0 = \frac{c}{2\pi} \sqrt{\frac{A}{VL}}$$

où c est la vitesse du son.

Ainsi dans l'invention, chaque cellule forme un pseudo résonateur de Helmholtz dont le col est formé par le conduit depuis l'entrée de la cellule et une cavité dans laquelle débouche le conduit.

A la figure 5, le col de la cellule est représenté hachuré, tandis que la cavité est représentée par une texture en pointillés.

Comparativement à l'état de la technique, dans lequel la cellule forme un volume et les orifices de la feuille percée qui surmonte la cellule forme un col, la longueur L du col formé dans l'invention par le conduit de la cellule est très fortement augmentée, ce qui abaisse la fréquence propre du résonateur.

Les figures 6 à 14 représentent des modes de réalisation alternatifs de l'invention fondés sur le principe précédemment décrit. Ces modes de réalisation ont notamment en commun que la paroi extérieure 6 et la paroi intérieure 7 qui définissent le conduit qui forme la cellule présentent des formes arrondies, sans arête, afin de ne pas perturber la propagation des ondes dans la cellule. En outre, les cellules juxtaposées longitudinalement sont imbriquées les unes par rapport aux autres, sans volume mort. Cela évite toute perte de surface acoustique et maximise la performance, en matière d'insonorisation, du revêtement.

La figure 6 présente en particulier deux cellules C1,C2 d'un revêtement insonorisant selon un mode de réalisation de l'invention dans lequel la géométrie de la cellule, vue en coupe selon le plan de coupe P, est fondée sur une ellipse 10 représentée en trait fin. En particulier, la paroi extérieure 6 vue dans le plan de coupe P suit le tracé de l'ellipse 10 sur une ou plusieurs portions de ladite ellipse 10, notamment au moins partiellement (et dans l'exemple ici représenté totalement) sur une portion reliant la première face 1 à la deuxième face 3.

Dans l'exemple représenté à la figure 6, les dimensions d1, d2 et d3 définies tel que précédemment expliqué en référence à la figure 4 sont telles que d1>d2>d3.

La figure 7 présente deux cellules C1,C2 d'un revêtement insonorisant selon un mode de réalisation de l'invention dans lequel la géométrie de la cellule, vue en coupe selon le plan de coupe P, est fondée sur un cercle 11 représenté en trait fin. En particulier, la paroi extérieure 6, vue dans le plan de coupe P, suit le tracé du cercle 11 au moins partiellement sur une portion reliant la première face 1 à la deuxième face 3.

Dans l'exemple représenté à la figure 7, les dimensions d1, d2 et d3 définies tel que précédemment expliqué en référence à la figure 4 sont telles que d1>d2>d3.

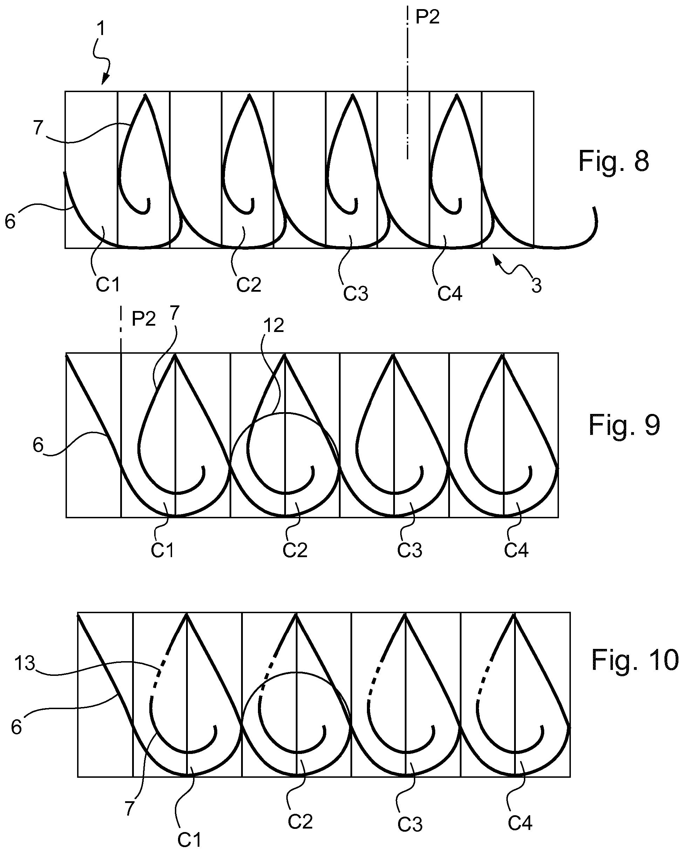

La figure 8 représente quatre cellules C1...C4 d'un revêtement insonorisant selon un mode de réalisation de l'invention. Ce mode de réalisation présente notamment la particularité que la première portion du conduit, entre l'entrée de la cellule et le début de la deuxième portion courbe présente une symétrie ou une quasi-symétrie selon un plan de symétrie P2 orthogonal au plan de coupe P et à la première face 1 du revêtement. Cette symétrie apparente permet un traitement au comportement acoustique quasiment symétrique.

La figure 9 représente quatre cellules C1...C4 d'un revêtement insonorisant selon un mode de réalisation de l'invention présentant tout comme le revêtement de la figure 8 des cellules ayant un conduit dont une première portion est symétrique ou quasi-symétrique selon le plan P2. Elle présente en particulier une section, dans le plan de coupe P, sensiblement en « V ». Dans la deuxième portion du conduit, formant une courbe tournant à 180° (par rapport à la direction générale de la première portion en « V », à savoir la troisième direction D3), la paroi extérieure 6 suit au moins partiellement un cercle de construction 12. Dans la mesure où dans cette deuxième portion de la paroi intérieure 7 s'étend également en arc de cercle, sensiblement parallèlement à la paroi extérieure 6, il en résulte que les dimensions d1, d2 et d3 sont sensiblement égales dans ce mode de réalisation.

Cette géométrie présente un col très étroit et très long, permettant une réduction acoustique importante sur des fréquences basses.

La figure 10 représente quatre cellules C1...C4 d'une variante du revêtement insonorisant représenté à la figure 9. La géométrie des cellules est en particulier identique. Dans la variante de la figure 10, la paroi extérieure 6 comporte une perforation 13 permettant un passage de fluide entre le col du résonateur que forme la cellule et sa cavité. Cette perforation 13 peut comporter un ou plusieurs orifices qui traversent la paroi intérieure 7.

Cela diminue la résistance acoustique du résonateur. Cette diminution est néanmoins obtenue au prix d'une altération de la symétrie acoustique du traitement. Une perforation 13 peut être ménagée dans ce but dans tous les modes de réalisation de l'invention, et notamment dans les modes de réalisation décrits en références aux figures 4 à 14.

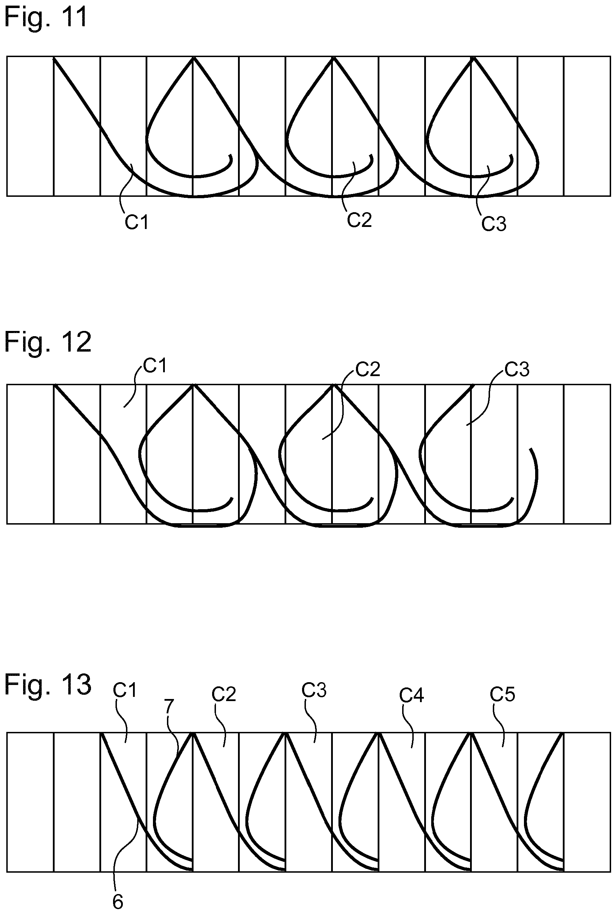

La figure 11 représente trois cellules C1...C3 d'un revêtement insonorisant selon un mode de réalisation de l'invention. La configuration du conduit est similaire à celle des cellules du revêtement de la figure 9, le conduit étant dans sa première portion symétrique ou quasi-symétrique selon le plan P2. La deuxième portion du conduit est courbe et est conformée de sorte que la direction du conduit à sa sortie est orientée à 180° par rapport à la direction générale de la première portion en « V », à savoir la troisième direction D3. La géométrie générale de la cellule est cependant élargie comparativement aux cellules du mode de réalisation de la figure 9. En particulier, l'ouverture de la cellule sur la première face 1 est fortement évasée, le « V » formé par la première portion du conduit étant plus ouvert, et le col du résonateur formé par le conduit étant allongé. Le volume de la cavité est augmenté. Des fréquences plus basses peuvent ainsi être traitées. Néanmoins, le nombre de cellules par mètre carré de revêtement est diminué, et les caractéristiques mécaniques du revêtement peuvent être diminuées.

La figure 12 représente trois cellules C1...C3 d'un revêtement insonorisant selon un mode de réalisation de l'invention. La configuration du conduit est similaire à celle des cellules du revêtement de la figure 11, le conduit étant dans sa première portion symétrique ou quasi-symétrique selon le plan P2. La deuxième portion du conduit forme une courbe tournant à 180° ou presque à 180° (en l'occurrence de l'ordre de 160°). La première portion du conduit est raccourcie, ce qui allonge la deuxième portion mais surtout augmente le volume de la cavité du résonateur. Des fréquences plus basses peuvent ainsi être traitées, mais la première portion du conduit est en forme de « V » plus court, ce qui augmente la résistance acoustique de la cellule.

La figure 13 représente cinq cellules C1...C5 d'un revêtement insonorisant selon un mode de réalisation de l'invention. Dans le mode de réalisation de la figure 13, la deuxième portion du conduit forme entre la direction du conduit à son entrée et la direction du conduit une courbe tournant à 90° dans le plan de coupe P avant de déboucher dans la cavité du résonateur. En d'autres termes, la deuxième portion débouche dans la cavité selon une direction orthogonale à sa direction d'entrée. La première portion du conduit s'étendant sensiblement selon la troisième direction D3, l'entrée dans la cavité se fait sensiblement selon la deuxième direction D2.

La figure 14 représente une vue tridimensionnelle du mode de réalisation de la figure 8. Les cellules du revêtement sont séparées les unes des autres, dans la direction transversale D2 par des parois longitudinales 5 parallèles entre elles. Les parois extérieure 6 et intérieure 7 des cellules s'étendent perpendiculairement aux parois longitudinales 5.

Une plaque perforée 2, ici représentée éclatée par rapport au reste du revêtement insonorisant forme la première face 1 dudit revêtement insonorisant. Dans tous les modes de réalisation de l'invention, la première face du revêtement insonorisant peut avantageusement comporter une couche résistive, à savoir par une feuille perforée 2 du côté de l'entrée du col (par exemple similaire aux feuilles perforées employées dans l'état de la technique) ou un treillis métallique (parfois désigné par l'expression anglophone « wiremesh »).

A l'opposé, sur sa deuxième face 3 le revêtement insonorisant comporte une feuille pleine 14 matérialisant ladite deuxième face 3 et offrant une bonne cohésion mécanique au revêtement insonorisant, et, le cas échéant, fermant les cellules sur la deuxième face 3.

Le revêtement présentant des cellules dont la face ouverte est carrée ou rectangulaire, il présente une bonne efficacité pour des écoulements tant selon la direction longitudinale D1 que la direction transversale D2.

La paroi intérieure 7 d'une cellule et la paroi extérieure 6 d'une cellule adjacente longitudinalement se rejoignant de sorte à ne former qu'une paroi transversale au niveau de la première face 1, il n'y a aucune perte de surface acoustique au niveau de ladite première face 1. En particulier, dans l'exemple représenté, la paroi transversale visible entre deux cellules au niveau de la première face 1 se limite à une arête de pliage ou de jonction entre la paroi intérieure 7 d'une cellule et la paroi extérieure 6 d'une cellule adjacente.

Plus particulièrement, la paroi intérieure 7 d'une cellule du revêtement et la paroi extérieure 6 d'une cellule adjacente se rejoignent au niveau de la première face 1. La paroi intérieure 7 et la paroi extérieure 6 d'une cellule adjacente forment entre elles un angle aigu, c'est-à-dire un angle inférieur à 90°, mesuré entre les parois à l'intérieur du revêtement acoustique. Cela forme une arête transversale au niveau de ladite première face 1. Une telle configuration, tout comme la configuration représentée à la figure 6 dans laquelle une paroi verticale transversale s'étend entre deux cellules adjacentes, fait que les ondes acoustiques entrent facilement dans les cellules du revêtement acoustique, au lieu de se réfléchir sur la première face 1 si la jonction entre les cellules adjacentes se faisait par une paroi arrondie au niveau de ladite première face 1.

Le revêtement insonorisant selon l'invention peut être réalisé en divers matériaux, notamment métallique, plastique, ou composite. Il peut être obtenu par divers modes de fabrication, par exemple par assemblage d'éléments unitaires. Par exemple, un élément unitaire peut former la paroi intérieure d'une cellule et la paroi extérieure d'une autre cellule adjacente. L'élément unitaire peut être obtenu par pliage d'une tôle, ou moulage d'un matériau plastique ou composite. Les parois longitudinales peuvent être constituées de tôles plates, ou de panneaux plats en matériau plastique, ou en composite. L'assemblage peut être obtenu par exemple par soudage ou collage.

La structure alvéolaire peut alternativement être obtenue par fabrication additive, à base d'un matériau plastique ou métallique.

Le revêtement insonorisant ainsi développé permet l'absorption des ondes acoustiques sur une plage de fréquences plus basse qu'un revêtement insonorisant de même épaisseur constitué selon l'état de la technique connu. En se fondant sur une configuration à structure alvéolaire dans laquelle les cellules de ladite structure sont séparées transversalement par des parois longitudinales parallèles, la mise en œuvre industrielle d'un revêtement selon l'invention est aisée.

L'invention trouve une application préférentielle dans la formation d'un panneau insonorisant pour nacelle d'un groupe propulseur d'aéronef. Un groupe propulseur d'aéronef est représenté schématiquement en coupe à la figure 15. Il comporte un moteur 15 comportant une turbomachine équipée d'une soufflante 16, et qui est installé dans une nacelle 17. Le revêtement 18 peut être installé en divers endroits particulièrement exposés à des ondes acoustiques, dans la nacelle et plus généralement dans le groupe propulseur. Le revêtement 18 peut être installé de sorte à former, au moins en partie, la face interne de la partie antérieure de la nacelle du groupe propulseur d'aéronef. Le revêtement 18 peut être installé dans une zone médiane de la face interne de la nacelle, à l'arrière de la soufflante 16. Le revêtement 18 peut également être installé sur une face interne de la partie arrière de la nacelle. Le revêtement 18 peut également être installé sur un carter du moteur 15.

Les exemples précédents sont mentionnés à titre d'exemples non limitatifs. Le revêtement acoustique développé dans l'invention est applicable à tout élément d'aéronef dont une surface est soumise à une excitation acoustique lors du fonctionnement dudit aéronef.

**Revendications**

1. Revêtement insonorisant comportant une structure alvéolaire, le revêtement présentant une première face (1) et une deuxième face (3), ladite structure alvéolaire étant formée de cellules (C1...C6) ouvertes sur ladite première face (1) et fermées sur ladite deuxième face (3), lesdites cellules (C1...C6) étant juxtaposées dans une première direction dite longitudinale (D1) et dans une deuxième direction dite transversale (D2) et qui est orthogonale à la direction longitudinale (D1) ; chaque cellule comportant :

   - un conduit s'étendant au moins entre la première face (1) et la deuxième face (3), ledit conduit étant formé entre une paroi extérieure (6) et une paroi intérieure (7) de la cellule et présentant une restriction de sa section, la paroi extérieure (6) et la paroi intérieure (7) présentant des formes arrondies, dénuées d'arêtes, et
   - une cavité (8) dans laquelle débouche ledit conduit,

   de sorte que la cellule forme un résonateur comportant un col (9) formé par ledit conduit, et ladite cavité, la cellule est conformée de sorte que le conduit et la cavité (8) sont formés de part et d'autre de la paroi intérieure (7),
   dans lequel la paroi intérieure (7) d'une cellule du revêtement et la paroi extérieure (6) d'une cellule adjacente se rejoignent de sorte à ne former qu'une paroi transversale séparant lesdites cellule et cellule adjacente au niveau de la première face (1),
   **caractérisé en ce que** la paroi intérieure (7) d'une cellule du revêtement et la paroi extérieure (6) d'une cellule adjacente se rejoignent au niveau de la première face (1) en formant entre elles un angle aigu de sorte à former une arête transversale au niveau de ladite première face (1).

2. Revêtement insonorisant selon la revendication 1, dans lequel chaque cellule présente une section sensiblement en volute dans un plan de coupe (P) longitudinal perpendiculaire à la direction transversale (D2).

3. Revêtement insonorisant selon l'une des revendications précédentes, dans lequel le conduit comporte successivement :

   • une première portion partant de la première face (1) du revêtement insonorisant en direction de la deuxième face (3) du revêtement insonorisant, et
   • une deuxième portion formant une courbe comportant une entrée et une sortie, et formant entre une direction du conduit à l'entrée de ladite deuxième portion et une direction du conduit à la sortie de ladite deuxième portion, un angle compris entre 90° et 180°.

4. Revêtement insonorisant selon la revendication 3, dans lequel la première portion de conduit est sensiblement symétrique selon un plan transversal (P2) perpendiculaire à la première face.

5. Revêtement insonorisant selon l'une des revendications précédentes, dans lequel le conduit formant le col (9) du résonateur et la cavité (8) sont dimensionnés de sorte que la fréquence de résonance dudit résonateur soit inférieure à 2000 Hz.

6. Revêtement insonorisant selon l'une des revendications précédentes, dont la première face (1) comporte une feuille résistive permettant la communication des cellules du revêtement avec l'extérieur dudit revêtement.

7. Revêtement insonorisant selon l'une des revendications précédentes, dans lequel la paroi intérieure (7) de chaque cellule comporte une perforation (13) liant de manière fluidique le col (9) à la cavité (8) du résonateur.

8. Groupe propulseur d'aéronef comportant une nacelle et un moteur, dans lequel une surface interne de la nacelle et/ou une surface externe d'un carter du moteur présente un revêtement insonorisant selon l'une des revendications 1 à 7.

**Patentansprüche**

1. Schalldämmende Beschichtung, die eine Wabenstruktur aufweist, wobei die Beschichtung eine erste Seite (1) und eine zweite Seite (3) hat, wobei die Wabenstruktur von Zellen (C1 ... C6) gebildet wird, die auf der ersten Seite (1) offen und auf der zweiten Seite (3) verschlossen sind, wobei die Zellen (C1 ... C6) in einer ersten sogenannten Längsrichtung (D1) und einer zweiten sogenannten Querrichtung (D2) nebeneinander angeordnet sind, die orthogonal zur Längsrichtung (D1) ist; wobei jede Zelle aufweist:

- einen Kanal, der sich zumindest zwischen der ersten Seite (1) und der zweiten Seite (3) erstreckt, wobei der Kanal zwischen einer Außenwand (6) und einer Innenwand (7) der Zelle gebildet wird und eine Verengung seines Querschnitts hat, wobei die Außenwand (6) und die Innenwand (7) abgerundete, kantenfreie Formen haben, und
- einen Hohlraum (8), in den der Kanal mündet,

so dass die Zelle einen Resonator bildet, der einen vom Kanal gebildeten Kragen (9) und den Hohlraum aufweist,
die Zelle so gestaltet ist, dass der Kanal und der Hohlraum (8) zu beiden Seiten der Innenwand (7) gebildet sind,
wobei die Innenwand (7) einer Zelle der Beschichtung und die Außenwand (6) einer benachbarten Zelle sich vereinen, um nur eine Querwand zu bilden, die die Zelle und ihre benachbarte Zelle im Bereich der ersten Seite (1) trennt, **dadurch gekennzeichnet, dass** die Innenwand (7) einer Zelle der Beschichtung und die Außenwand (6) einer benachbarten Zelle sich im Bereich der ersten Seite (1) vereinen, indem sie zwischen sich einen spitzen Winkel bilden, um eine Querkante im Bereich der ersten Seite (1) zu bilden.

2. Schalldämmende Beschichtung nach Anspruch 1, wobei jede Zelle in einer Längsschnittebene (P) lotrecht zur Querrichtung (D2) einen im Wesentlichen spiralförmigen Querschnitt hat.

3. Schalldämmende Beschichtung nach einem der vorhergehenden Ansprüche, wobei der Kanal nacheinander aufweist:

• einen ersten Abschnitt ausgehend von der ersten Seite (1) der schalldämmenden Beschichtung in Richtung der zweiten Seite (3) der schalldämmenden Beschichtung, und
• einen zweiten eine Kurve bildenden Abschnitt, der einen Eingang und einen Ausgang aufweist und zwischen einer Richtung des Kanals am Eingang des zweiten Abschnitts und einer Richtung des Kanals am Ausgang des zweiten Abschnitts einen Winkel zwischen 90° und 180° bildet.

4. Schalldämmende Beschichtung nach Anspruch 3, wobei der erste Kanalabschnitt gemäß einer Querebene (P2) lotrecht zur ersten Seite im Wesentlichen symmetrisch ist.

5. Schalldämmende Beschichtung nach einem der vorhergehenden Ansprüche, wobei der den Kragen (9) des Resonators bildende Kanal und der Hohlraum (8) so bemessen sind, dass die Resonanzfrequenz des Resonators niedriger als 2000 Hz ist.

6. Schalldämmende Beschichtung nach einem der vorhergehenden Ansprüche, deren erste Seite (1) eine Widerstandsfolie aufweist, die die Kommunikation der Zellen der Beschichtung mit der Außenumgebung der Beschichtung erlaubt.

7. Schalldämmende Beschichtung nach einem der vorhergehenden Ansprüche, wobei die Innenwand (7) jeder Zelle eine Perforierung (13) aufweist, die den Hals (9) fluidisch mit dem Hohlraum (8) des Resonators verbindet.

8. Flugzeugtriebwerk, das eine Gondel und einen Motor aufweist, wobei eine Innenfläche der Gondel und/oder eine Außenfläche eines Gehäuses des Motors eine schalldämmende Beschichtung nach einem der Ansprüche 1 bis 7 hat.

**Claims**

1. Soundproof covering comprising a cellular structure, the covering having a first face (1) and a second face (3), said cellular structure being formed of cells (C1...C6) that are open onto said first face (1) and closed on said second face (3), said cells (C1...C6) being juxtaposed in a first direction referred to as longitudinal (D1) and in a second direction referred to as transverse (D2) and which is orthogonal to the longitudinal direction (D1); each cell comprising:

   - a duct extending at least between the first face (1) and the second face (3), said duct being formed between an exterior wall (6) and a interior wall (7) of the cell and exhibiting a restriction of its cross section, the exterior wall (6) and the interior wall (7) having rounded shapes with no sharp edges, and
   - a cavity (8) into which said duct opens,

   so that the cell forms a resonator comprising a neck (9) formed by said duct, and said cavity, the cell being shaped in such a way that the duct and the cavity (8) are formed one on each side of the interior wall (7), in which the interior wall (7) of one cell of the covering and the exterior wall (6) of an adjacent cell meet in such a way as to form just one transverse wall separating said cell and adjacent cell at the first face (1), **characterized in that** the interior wall (7) of one cell of the covering and the exterior wall (6) of an adjacent cell meet at the first face (1) to form between them an acute angle so as to form a transverse sharp edge at said first face (1).

2. Soundproofing coating according to Claim 1, in which each cell has a cross section that is substantially scroll-shaped in a longitudinal plane of section (P) perpendicular to the transverse direction (D2).

3. Soundproofing coating according to one of the preceding claims, in which the duct comprises in succession:

   • a first portion starting from the first face (1) of the soundproofing coating towards the second face (3) of the soundproofing coating, and
   • a second portion forming a curve having an inlet and an outlet and forming between a direction of the duct at the inlet of said second portion and a direction of the duct at the outlet of said second portion an angle comprised between 90° and 180°.

4. Soundproofing coating according to Claim 3, in which the first duct portion is substantially symmetrical about a transverse plane (P2) perpendicular to the first face.

5. Soundproofing coating according to one of the preceding claims, in which the duct forming the neck (9) of the resonator and the cavity (8) are dimensioned in such a way that the resonant frequency of said resonator is less than 2000 Hz.

6. Soundproofing coating according to one of the preceding claims, of which the first face (1) comprises a resistive sheet allowing the cells of the coating to communicate with the outside of said coating.

7. Soundproofing coating according to one of the preceding claims, in which the interior wall (7) of each cell comprises a perforation (13) fluidically connecting the neck (9) to the cavity (8) of the resonator.

8. Aircraft propulsion unit comprising a nacelle and an engine, in which an internal surface of the nacelle and/or an external surface of a casing of the engine has a soundproofing coating according to one of Claims 1 to 7.

Fig. 1

Fig. 2

Fig. 3

Fig. 4

Fig. 5

Fig. 6

Fig. 7

Fig. 8

Fig. 9

Fig. 10

Fig. 11

C1    C2    C3

Fig. 12

C1    C2    C3

Fig. 13    C1    7    C2    C3    C4    C5

6

Fig. 14

Fig. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015292413 A

- US 4433751 A